# EUROPÄISCHE PATENTANMELDUNG

(11) **EP 0 590 316 A1**
(43) Veröffentlichungstag der Anmeldung: **06.04.1994**
(21) Anmeldenummer: 93113726.9
(22) Anmeldetag: 27.08.1993
(51) Int. Cl.: F16M 7/00

(54) **Schraubverbindung zum justierbaren Befestigen eines Gerätes oder eines Geräteträgers an einer Unterlage**

(30) Priorität: 30.09.1992 DE 9213169 U
(71) Anmelder: Mannesmann Kienzle GmbH, D-78052 Villingen-Schwenningen (DE)
(72) Erfinder: Schaumann, Hans, D-78050 Villingen-Schwenningen (DE)

(57) **Zusammenfassung**

Es wird eine Schraubverbindung insbesondere für die Befestigung eines Gerätes in einem Kraftfahrzeug vorgeschlagen, die schnell und mit einfachen Mitteln sowie in einer Richtung durchführbar ist.

Im einzelnen ist in der Unterlage (1) ein Muttergewinde angebracht, in welches ein mit einem Innensechskant (13) versehener Gewindebolzen (12) einschraubbar ist. Auf dem Gewindebolzen (12) ist eine als Anschlag für das Auflegen des Gerätes dienende, vorzugsweise selbstsichernde Mutter (16) aufgeschraubt, welche zum Befestigen des Gerätes mit einer Kontermutter (17) zusammenwirkt.

## Beschreibung

Für eine Anordnung insbesondere für eine starre und eigenschwinggungssichere Befestigung von Meß- bzw. Datenerfassungsgeräten, die nicht der ununterbrochenen visuellen Information über die Betriebsdaten eines Kraftfahrzeugs dienen, beispielsweise für Geräte, die der Unfalldatenerfassung dienen oder für Langzeitdatenerfassung im Hinblick auf eine flexible Wartung des Fahrzeugs oder eine kommerzielle Nutzungsrechnung vorgesehen sind, sind in der Regel im Innenraum eines Fahrzeuges keine Vorkehrungen getroffen. Da für den Einbau und die Entnahme eines derartigen Gerätes, beispielsweise eines Unfalldatenspeichers, außerdem eine gewisse Zugänglichkeit gegeben sein und aus ästhetischen Gründen eine unauffällige Anordnung angestrebt werden muß andererseits das Gerät in einen möglichst knautschsicheren Bereich des Fahrzeuges anzubringen ist, kommt als Einbauort in der Regel nur der Fahrzeugboden unter dem Fahrer- bzw. dem Beifahrersitz oder den Rücksitzen in Betracht.

Der Fahrzeugboden ist jedoch in diesen Bereichen durch Versteifungsholme und durch die wannenförmige Gestaltung der Fußräume oder durch Verrippung in den wenigsten Fahrzeugtypen eben und, wenn das Fahrzeug auf einer horizontalen Fahrbahn steht, horizontal.

Die Forderung nach Horizontallage ist bei Geräten, welche navigatorische Sensoren beinhalten oder mit Sensoren ausgerüstet sind, die üblicherweise horizontal wirkende Kräfte optimal erfassen sollen, also z. B. bei Unfalldatenspeichern unerläßlich. Der in Frage kommende Einbauort bietet jedoch grundsätzlich erhöhte Montageschwierigkeiten und ist, was eine horizontale Anbringung anbelangt, denkbar ungünstig, d. h. es ist erforderlich, die Unebenheiten des Fahrzeugbodens auszugleichen und gegebenenfalls eine justierbare Befestigung des Gerätes vorzunehmen.

Es war somit die Aufgabe gestellt, für ein justierbares Befestigen eines Gerätes oder eines Geräteträgers in einem Fahrzeug eine Schraubverbindung zu schaffen, welche mit möglichst einfachen Mitteln auch unter ungünstigen Einbaubedingungen eine schnelle Montage gewährleistet.

Die Lösung dieser Aufgabe beschreibt der Anspruch 1. Vorteilhafte Ausbildungen sind in den Unteransprüchen dargestellt.

Die gefundene Lösung zeichnet sich insbesondere dadurch aus, daß die Montage und die Justierung eines Gerätes oder eines Geräteträgers von einer Seite aus, mit anderen Worten in einer Richtung erfolgen kann. Ferner sind für die lösungsgemäße Schraubverbindung ausschließlich genormte Bauelemente vorgesehen, die mittels üblicher Werkzeuge betätigt werden können. Mit der gefundenen Lösung lassen sich die bei den geschilderten schwierigen Einbausituationen erforderlichen groben Toleranzen bezüglich des Anbringens von Überbrückungswinkeln und Befestigungskonsolen auf einfache Weise, d. h. ohne daß in zeitraubender Weise Ausgleichsscheiben und dergleichen ausprobiert und angebracht werden müssen ausgleichen, so daß auch der Selbsteinbau eines Gerätes möglich ist. Von besonderer Bedeutung ist es, daß die Montage schnell und mit einfachen Mitteln durchführbar ist und somit die Kosten eines Einbaus in einer Kundendienstwerkstatt reduziert sind.

Vorteilhaft ist ferner die gezielt angewandte Verformbarkeit an der Verbindungsstelle eines Gewindebolzens und dem zu befestigenden Gerät bzw. dem Geräteträger. Dadurch wird vermieden, daß bei Nichtparallellage von Geräteträger und Unterlage beim Anziehen der Schraubverbindung ein auf die Verbindungsstelle des Gewindebolzens in der Unterlage in schädlicher Weise einwirkendes Kippmoment entsteht.

Im folgenden sei die Erfindung anhand der beigefügten Zeichnungen näher erläutert. Es zeigen:
Fig. 1 eine Seitenansicht eines mittels der erfindungsgemäßen Schraubverbindung befestigten Gerätes.
Fig. 2 eine Schnittdarstellung der Schraubverbindung.
Fig. 3 die für die erfindungsgemäße Schraubverbindung erforderlichen Bauteile in ihrer Montagefolge.
Fig. 4 eine Ansicht der Schraubverbindung während des Justierens.
Fig. 5 eine schematische Darstellung der Montage eines Geräteträgers auf einem Fahrzeugboden unter Verwendung eines Unebenheiten ausgleichenden Halters.
Fig. 6 eine schematische Darstellung der Montage eines Geräteträgers auf einem an einer Wand befestigten Halter.
Fig. 7 eine schematische Darstellung der Montage eines Geräteträgers unmittelbar an einer im wesentlichen senkrecht stehenden Wand.

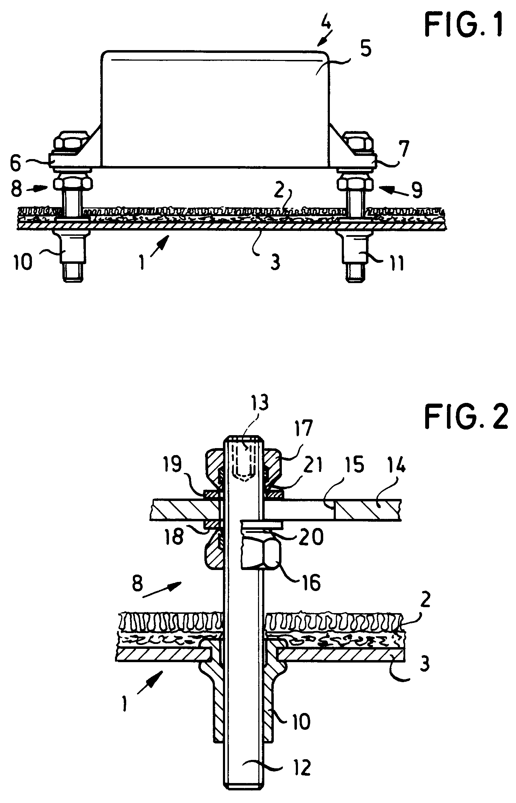

Die Übersichtsdarstellung Fig. 1 zeigt ein auf einer Unterlage 1 in diesem Falle auf einer mit einer Verkleidung 2 versehenen Wand oder einem Bodenblech 3 eines Fahrzeuges befestigtes Gerät 4, dessen Gehäuse 5 mit geeigneten Befestigungskonsolen, von denen zwei, 6 und 7 dargestellt sind, versehen ist.

Zur Anbringung der zur Befestigung des Gerätes 4 vorgesehenen erfindungsgemäßen Schraubverbindung 8 bzw. 9, die um eine Überbestimmung zu vermeiden vorzugsweise lediglich dreifach verwendet wird, sind mit der Wand bzw. dem Bodenblech 3 Blindnietmuttern beispielsweise 10 und 11 verbunden. Bei ausreichender Blechstärke ist selbstverständlich auch ein unmittelbar in der Wand angebrachtes Muttergewinde verwendbar. Eine Blindnietmutter bietet aber eine bessere Führung für den für die Schraubverbindung 8 vorgesehenen Gewindebolzen 12. Außerdem ist das Setzen der Blindnietmuttern schneller durchgeführt.

Wie aus Fig. 2 hervorgeht, ist der Gewindebolzen 12 mit einem Innensechskant 13 versehen. Mit 14 ist ein Geräteträger bzw. eine Montageplatte bezeichnet, die vorzugsweise als Lochplatte ausgebildet ist, um für das zu befestigende Gerät einen gewissen Anordnungsspielraum und die Möglichkeit zu bieten, unterschiedlich geformte Geräte befestigen zu können. Mit 15 ist ein in dem Geräteträger 14 vorgesehenes Langloch bezeichnet. Die feste Verbindung des Geräteträgers 14 mit dem Gewindebolzen 12 erfolgt mittels zweier Muttern 16 und 17, von denen wenigstens eine, 16, eine selbstsichernde Mutter darstellt. Die zusätzlich verwendeten Zwischenlegscheiben 18 und 19 bestehen vorzugsweise aus einem, gegenüber dem Geräteträger 14, leichter verformbaren Material oder es werden Zahnscheiben verwendet, die ihrerseits verformend wirken können. Mit dieser Maßnahme lassen sich auf die Blindnietmutter einwirkende Kippmomente kompensieren, die beim Festspannen des Geräteträgers 14 in den Fällen auftreten, in denen die Lage des Geräteträgers 14 nach der Justage von einer Parallellage zur Unterlage 1 merklich abweicht. Dem gleichen Zweck dient die Nutzung der konischen Ausbildung der Muttern 16 und 17 sowie deren Anordnung, bei der die Konen 20 und 21 gegeneinander weisen. Dadurch wird die Auflagefläche der Muttern 16 und 17 auf den Zwischenlegscheiben 18 und 19 verringert, die Flächenpressung erhöht und somit eine Schrägstellung zwischen dem Geräteträger 14 und dem Gewindebolzen 12, unter Verformung der Zwischenlegscheiben 18 und 19 erleichtert.

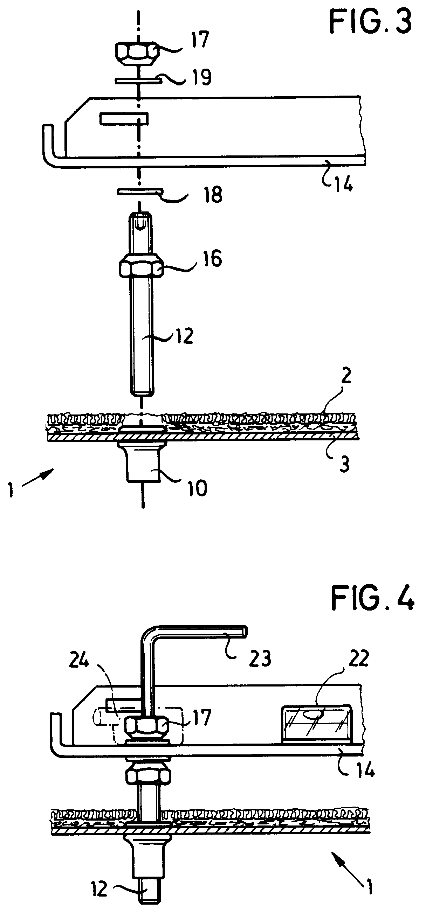

Die Fig. 3 stellt die Montagefolge der erfindungsgemäßen Schraubverbindung dar. Sie zeigt, daß nach dem Befestigen der Blindnietmutter 10 an dem Bodenblech 3 der Gewindebolzen 12 in die Blindnietmutter 10 bis zu einer bestimmten, den Abstand des Geräteträgers 14 vom Bodenblech 3 bestimmenden Länge, eingeschraubt wird. Die selbstsichernde Mutter 16 ist bereits bei einer Vormontage auf den Gewindebolzen 12 aufgeschraubt worden. Danach wird die Zwischenlegscheibe 18, der Geräteträger 14 und die Zwischenlegscheibe 19 aufgelegt und die Mutter 17 lose aufgeschraubt.

Die Fig. 4 zeigt die Schraubverbindung während des Justierens, d. h. unter der Voraussetzung, daß der Geräteträger 14 in die Horizontale auszurichten ist, wird eine Libelle 22 aufgelegt und mittels eines Innensechskantschlüssels 23 der Gewindebolzen 12 mit dem aufliegenden Geräteträger 14 höhenverstellt. Danach wird mittels eines Ringschlüssels 24 die Kontermutter 17 angezogen und die Verschraubung festgespannt und so die justierte Lage des Geräteträgers 14 gesichert.

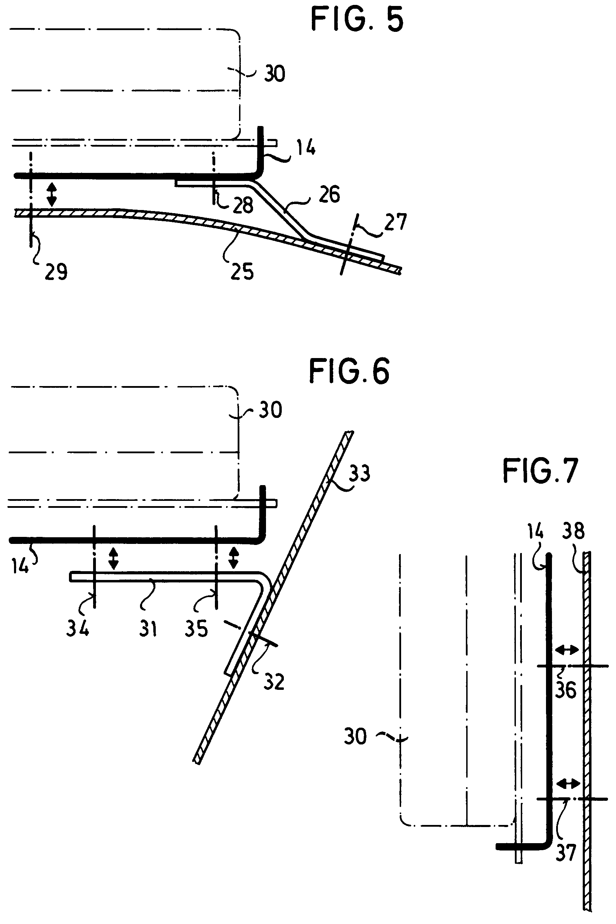

Mit der Fig. 5 ist eine Anordnung skizziert, bei der im Einbaubereich die Unterlage 25 derart gekrümmt ist, daß ein Halter 26 verwendet werden muß. Dieser wird mit der Unterlage 25 in einfacher Weise, d. h. nicht justierbar verschraubt (Verschraubung 27). In gleicher Weise kann der Halter 26 mit dem Geräteträger 14 verbunden werden (Verschraubung 28), wobei davon ausgegangen werden kann, daß der Halter 26 und gegebenenfalls die Befestigungsstelle eine gewisse Verformbarkeit aufweisen und somit mit nur einer justierbaren Schraubverbindung 29 eine Justierung des Geräteträgers 14 wenigstens in einer Richtung vorgenommen werden kann. Soll ein Gerät 30 am Boden eines Fahrzeuges angeordnet werden, so ist eine derartige Justierung, d. h. eine Justierbarkeit ausschließlich in Fahrtrichtung, ausreichend.

Die Anordnungsskizze gemäß Fig. 6 zeigt ebenfalls einen Halter 31, der mittels einer nicht justierbaren Verschraubung 32 an einer Wand 33 befestigt ist. In diesem Falle muß der Geräteträger 14 mittels mehrerer justierbarer Schraubverbindungen 34, 35 auf dem ausschließlich als Unterlage dienenden Halter 31 befestigt werden, wobei bei entsprechender Stärke des Halters 31 die der Aufnahme der Gewindebolzen 12 dienenden Muttergewinde unmittelbar in dem Halter 31 ausgebildet sein können.

Wie aus Fig. 7 hervorgeht, läßt sich der Geräteträger 14 mittels der erfindungsgemäßen Schraubverbindung 36 und 37 auch unmittelbar an einer im wesentlichen vertikal stehenden Wand 38 anbringen und vertikal oder wandparallel ausrichten .

## Patentansprüche

1. Schraubverbindung zum justierbaren Befestigen eines Gerätes oder eines Geräteträgers an einer Unterlage, dadurch gekennzeichnet,
daß in der Unterlage (1) ein Muttergewinde ausgebildet ist,
daß ein in das Muttergewinde einschraubbarer Gewindebolzen (12) vorgesehen ist,
daß an dem Gewindebolzen (12) ein Anschlag zum Auflegen des Gerätes oder des Geräteträgers (4, 14) angeordnet ist,
daß an dem Gewindebolzen (12) in axialer Richtung wenigstens ein Innensechskant (13) ausgebildet ist,
und
daß zur Verbindung des Gerätes oder des Geräteträgers (4, 14) mit dem Gewindebolzen (12) eine auf den Gewindebolzen (12) aufschraubbare Kontermutter (17) vorgesehen ist.

2. Schraubverbindung nach Anspruch 1,
dadurch gekennzeichnet,
daß der Anschlag mittels einer auf den Gewindebolzen (12) aufgeschraubten selbstsichernden Mutter (16) gebildet ist.

3. Schraubverbindung nach Anspruch 1,
dadurch gekennzeichnet,
daß das in der Unterlage (1) vorgesehene Muttergewinde bei einer Unterlage aus Blech (3, 25, 38) mittels einer Blindnietmutter (10) gebildet ist.

4. Schraubverbindung nach Anspruch 1 und 2,
dadurch gekennzeichnet,
daß zwischen dem Gerät oder dem Geräteträger (4, 14), der Auflagemutter (16) und der Kontermutter (17) verformbare oder eine Verformung bewirkende Zwischenlegscheiben (18, 19) vorgesehen sind.

5. Schraubverbindung nach Anspruch 4,
dadurch gekennzeichnet,
daß die Auflagemutter (16) und die Kontermutter (17) konisch verjüngt ausgebildet sind und mit der dadurch gegebenen Ringschneide gegeneinander weisend auf dem Gewindebolzen (12) angeordnet sind.

6. Verfahren zum justierbaren Befestigen eines Gerätes oder eines Geräteträgers unter Verwendung von Schraubverbindungen nach Anspruch 1,
dadurch gekennzeichnet,
daß in die in der Unterlage 1 ausgebildeten Muttergewinde mit den Anschlagmuttern (16) versehene Gewindebolzen (12) eingedreht werden, daß das Gerät oder der Geräteträger (4, 14) auf die Anschlagmuttern (16) aufgesetzt wird,
daß die Kontermuttern (17) lose auf die Gewindebolzen (12) aufgeschraubt werden,
daß durch Verdrehen der Gewindebolzen (12) mittels eines Innensechskantschlüssels (23) die Lage des Gerätes oder des Geräteträger (4, 14) justiert wird und
daß die Schraubverbindungen (8, 9, 29, 34, 35, 36, 37) durch Anziehen der Kontermuttern (17) festgespannt werden.

7. Verfahren nach Anspruch 6,
dadurch gekennzeichnet,
daß zum horizontalen Ausrichten des Gerätes oder des Geräteträgers (4, 14) eine Libelle (22) mit einem kalottenförmigen Luftblasenraum auf das Gerät oder den Geräteträger (4, 14)gelegt wird und danach die Gewindestifte (12) mittels des Innensechskantschlüssels (23) eingestellt werden.
